# EUROPÄISCHE PATENTSCHRIFT

(11) **EP 2 497 230 B1**
(45) Veröffentlichungstag und Bekanntmachung des Hinweises auf die Patenterteilung: **01.05.2013**
(21) Anmeldenummer: 11746224.2
(22) Anmeldetag: 15.08.2011
(51) Int. Cl.: H04L 12/40

(54) **VERFAHREN ZUM BETREIBEN EINES BUS-SYSTEMS**
METHOD FOR OPERATING A BUS SYSTEM
PROCÉDÉ POUR FAIRE FONCTIONNER UN SYSTÈME À BUS

(30) Priorität: 27.08.2010 EP 10174301
(43) Veröffentlichungstag der Anmeldung: 12.09.2012
(73) Patentinhaber: ELMOS Semiconductor AG, 44227 Dortmund (DE)
(72) Erfinder: WATROBA, Radoslaw, 44227 Dortmund (DE); KRALY, Rainer, 44227 Dortmund (DE); SCHMITZ, Christian, 44227 Dortmund (DE)
(74) Vertreter: von Kreisler Selting Werner
(86) Internationale Anmeldenummer: PCT/EP2011/064038
(87) Internationale Veröffentlichungsnummer: WO 2012/025419

(56) Entgegenhaltungen:
- FR-A3- 2 917 555
- BOSCH: "CAN Specification version 2.0", INTERNET CITATION, 1991, XP002156917, Gefunden im Internet: URL:http://www.infineon.com/cmc_upload/mig rated_files/document_files/Appl ication_Notes/can2spec.pdf [gefunden am 2001-01-10]

## Beschreibung

Die Erfindung betrifft ein Verfahren zum Betreiben eines Bus-Systems und insbesondere ein Verfahren zum Überführen von Teilnehmern eines Bus-Systems aus einem ersten Zustand mit reduziertem Energieverbrauch in einen zweiten Zustand mit gegenüber dem ersten Zustand erhöhtem Energieverbrauch.

Die Kfz-Hersteller geraten zunehmend unter Druck, was die Minimierung des CO₂-Ausstoßes der Kraftfahrzeuge anbelangt. Eine Möglichkeit zur Emissionsreduktion bei Fahrzeugen ist die Einführung von partiellen Kommunikationsnetzwerken in den Fahrzeugen, in denen nicht benötigte Funktionen (d.h. Steuergeräte bzw. Bus-Teilnehmer) abgeschaltet und auf Bedarf temporär reaktiviert werden. Dieser Gedanke ist nicht neu und beispielsweise in DE 198 09 726A1, DE 103 58 584 A1, EP 0 870 648 B1, WO 03/104037 A1 und WO 2006/003540 A1 beschrieben; bis heute fehlen allerdings technisch darstellbare und kommerziell attraktive Lösungen für die zuvor genannte Vorgehensweise.

Aus FR 2 917 555 A3 ist ein Verfahren zum Überführen von Teilnehmern eines Bus-Systems aus einem ersten Zustand mit reduziertem Energieverbrauch in einen zweiten Zustand mit gegenüber der ersten Zustand erhöhtem Energieverbrauch bekannt, wobei zur Kommunikation der Teilnehmer des Bus-Systems Daten-Rahmen versendet werden, die unter anderem ein Nachrichten-Identifikationsfeld aufweisen. Bei diesem Verfahren reagiert jeder Teilnehmer für eine Überführung aus dem ersten Zustand in den zweiten Zustand auf Daten-Rahmen mit einem vorbestimmten Dateninhalt in dem Nachrichten-Identifikationsfeld, wobei in dem Bus-System zum selektiven Überführen eines Teilnehmers aus dem ersten Zustand in den zweiten Zustand diejenigen Daten-Rahmen versendet werden, auf deren Nachrichten-Identifikationsfeldinhalt der selektiv anzusprechende Teilnehmer reagiert.

Bei heutigen Lösungen sind die Anwender hinsichtlich der für die temporäre selektive Reaktivierung der Bus-Teilnehmer zur Verfugung stehenden, über das Kommunikationsnetz zu versendenden Botschaften limitiert. Als Beispiel sei hier der CAN-Bus genannt (BOSCH: "CAN Specification version 2.0", INTERNET CITATION, 1991, XP002156917). Die für die Weckfunktion zur Verfügung stehenden Botschaften sind zumeist in den Bus-Teilnehmern "hart" kodiert als "pattern", auf das reagiert wird, wobei die Weckursache/-quelle nicht bestimmt werden kann. Die Einführung einiger weiterer diskreter "pattern" würde leider auch nur bedingt weiterhelfen.

Aufgabe der Erfindung ist es, ein Verfahren zum Überführen von Teilnehmern eines Bus-Systems aus einem ersten Zustand mit reduziertem Energieverbrauch in einen zweiten Zustand mit gegenüber dem ersten Zustand erhöhtem Energieverbrauch vorzuschlagen, wobei das Verfahren eine größere Flexibilität erlaubt und die Nutzung netzübergreifender Botschaften ermöglicht.

Zur Lösung dieser Aufgabe wird mit der Erfindung ein Verfahren zum Überführen von Teilnehmern eines Bus-Systems aus einem ersten Zustand mit reduziertem Energieverbrauch in einen zweiten Zustand mit gegenüber dem ersten Zustand erhöhtem Energieverbrauch vorgeschlagen, wobei zur Kommunikation der Teilnehmer des Bus-Systems Daten-Rahmen versendet werden, die unter anderem ein Nachrichten-Identifikationsfeld (z. B. CAN-Botschaft) und ein Nutzdatenfeld (z. B. CAN-Payload) aufweisen und wobei bei dem Verfahren
- jeder Teilnehmer für eine Überführung aus dem ersten Zustand in den zweiten Zustand auf Daten-Rahmen mit jeweils vorbestimmten Dateninhalten sowohl in dem Nachrichten-Identifikationsfeld als auch in dem Nutzdatenfeld reagiert und
- in dem Bus-System zum selektiven Überführen eines Teilnehmers aus dem ersten Zustand in den zweiten Zustand diejenigen Daten-Rahmen versendet werden, auf deren Nachrichten-Identifikationsfeldinhalt und Nutzdatenfeldinhalt der selektiv anzusprechende Teilnehmer reagiert.

Nach der Erfindung ist vorgesehen, dass Dateninhalte sowohl für das Nachrichten-Identifikationsfeld als auch für das Nutzdatenfeld eines Daten-Rahmens im Vorhinein bestimmt und definiert werden, auf die dann beim späteren Versenden dieser Datenrahmen im Bus-System die selektiv anzusprechenden Teilnehmer reagieren, und zwar mit dem Ergebnis, dass sie vom ersten Zustand in den zweiten Zustand überführt werden. Durch diese Vorgehensweise kann nun der Anwender sein Bus-System frei konfigurieren, was die Flexibilität und die Einsatzmöglichkeiten des Bus-Systems erhöht,

Mit Hilfe der Erfindung ist es also möglich, die Teilnehmer eines Bus-Systems selektiv und mit beliebigen, zuvor bezüglich des Nachrichten-Identifikationsfelds und des Nutzdatenfelds vorbestimmten Dateninhalten von Daten-Rahmen aus einem Zustand mit niedrigem Energiebedarf in einen Zustand mit höherem Energiebedarf zu versetzen. Ferner können mit den erfindungsgemäßen Verfahren Gruppen (Cluster) von Bus-Teilnehmern gebildet werden, die mit einem einzigen Daten-Rahmen gleichzeitig angesprochen und/oder aktiviert werden können. Dies kann wahlweise mit Hilfe von Nutzdatenfeldinhalten (Payload) und/oder durch Maskierung der Nachrichten-Identifikationsfelder geschehen.

Zweckmäßigerweise wird das erfindungsgemäße Verfahren insbesondere in einem CAN-Bus-System abgewendet, wobei das CAN-ID-Feld als Nachrichtenidentifikationsfeld und das CAN-Payload-Feld als Nutzdatenfeld eines CAN-Daten-Rahmens verwendet wird. Die Erfindung ist aber auch in anderen Bus-Systemen wie beispielsweise einem LIN- oder FlexRay-Netzwerk einsetzbar.

Mitunter kann es vorteilhaft sein, wenn mehrere Teilnehmer des Bus-Systems durch Versendung eines (einzigen) Daten-Rahmens aufgeweckt werden. Auch ist es in bestimmten Anwendungen von Vorteil, wenn verschiedene Master-Teilnehmer eines Bus-Systems andere Bus-System-Teilnehmer aufwecken können. Diese Varianten werden abgedeckt, indem mehrere Teilnehmer des Bus-Systems auf den gleichen vorbestimmten Dateninhalt in dem Nachrichten-Identifikationsfeld sowie auf unterschiedliche jeweils vorbestimmte Dateninhalte in dem Nutzdatenfeld oder auf unterschiedliche jeweils vorbestimmte Dateninhalte in dem Nachrichten-Identifikationsfeld sowie auf unterschiedliche jeweils vorbestimmte Dateninhalte in dem Nutzdatenfeld oder auf unterschiedliche jeweils vorbestimmte Dateninhalte in dem Nachrichten-Identifikationsfeld sowie auf den gleichen vorbestimmten Dateninhalt in dem Nutzdatenfeld reagieren.

Die Erfindung wird nachfolgend anhand eines Ausführungsbeispiels und unter Bezugnahme auf die Zeichnung näher erläutert. Im Einzelnen zeigen dabei:
- Fig. 1: ein Beispiel für ein CAN-Bus-System in einem Kraftfahrzeug und
- Fig. 2: beispielhaft den Aufbau eines Fensterhebersteuergeräts, wie es in dem Bus-System nach Fig. 1 verwendet wird.

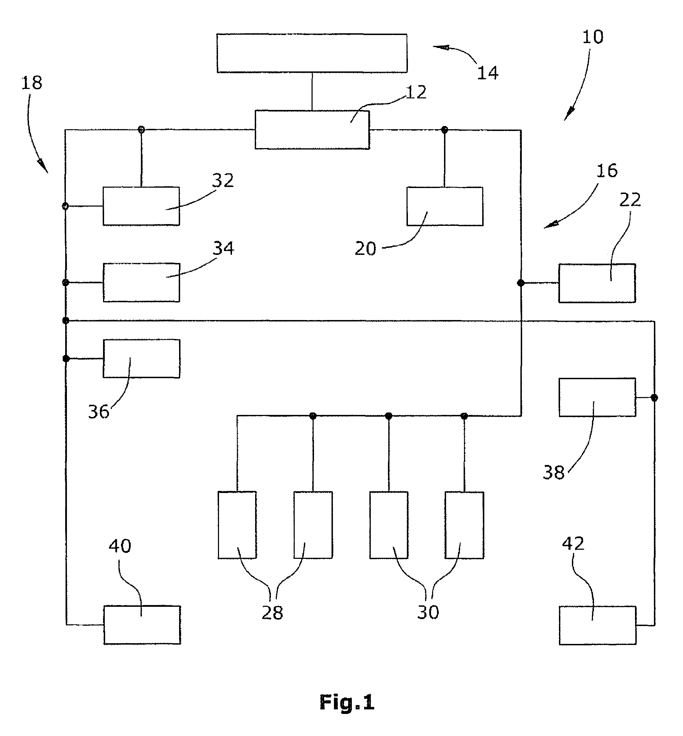

In Fig. 1 ist schematisch ein Teil eines Kommunikationsnetzwerks 10 eines Kraftfahrzeuges dargestellt, dessen Teilnehmer sich selektiv "aufwecken" lassen. Uber ein Gateway 12 sind mehrere CAN-Teilnetzwerke miteinander verbunden. Zu diesen Teilnetzwerken gehört beispielsweise ein "Antriebs-CAN" 14 für das Motormanagement, ein "Komfort-CAN" 16 für die Klimaanlage und die Sitzverstellungen und ein "Kombi-CAN" 18, das die Zentralverriegelung und in diesem Ausführungsbeispiel die Türsteuerung umfasst.

Der "Antriebs-CAN" 14 ist in Fig. 1 im Einzelnen nicht dargestellt. Zum "Komfort-CAN" 16 gehören neben einem Klimasteuergerät 20 und verschiedenen durch 22 repräsentierten Stellern für Lüftungsklappen, Gebläse und das Heizaggregat weitere Teilnehmer 28, 30 für die Sitzverstellung, die Sitzheizung, ggf. eine Sitzbelüftung und eine Sitzmassage.

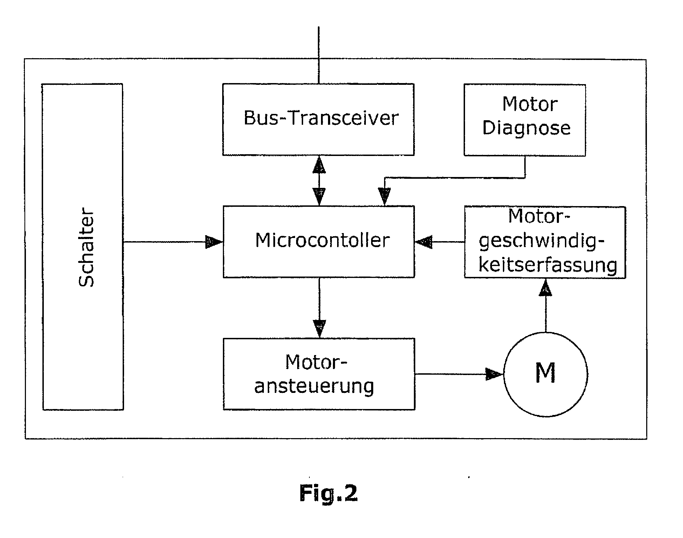

Der "Kombi-CAN" 18 kann das Steuergerät 32 für die Zentralverriegelung und das Tursteuergerät 34 sowie Fensterhebersteuergeräte 36, 38, 40, 42 für vier Seitenscheiben umfassen. Der Aufbau eines derartigen Fensterhebersteuergeräts ist schematisch in Fig. 2 gezeigt.

Mit dem erfindungsgemäßen Verfahren lassen sich nun die CAN-ID- und CAN-Payload-Felder nutzen, um gezielt und selektiv einzelne Teilnehmer oder auch Gruppen von Teilnehmern des Bus-Systems "zu wecken". Dabei schafft die Möglichkeit der freien Konfigurierbarkeit eine erhöhte Flexibilität auf Seiten des Anwenders. Netzübergreifend, d. h. beispielsweise fur den "Antriebs-CAN" 14, den "Komfort-CAN" 16, den "Kombi-CAN" 18 sowie weitere CAN-Netzwerke braucht nur eine CAN-Botschaft benutzt zu werden, ohne dass diese vom Gateway 12 für die jeweiligen Teilnetzwerke ubersetzt werden muss. Zusätzlich sollte lediglich eine CAN-Botschaft alle benötigten Steuergeräte wecken können.

Mit der Erfindung ist eine "abwärtskompatible" Methode unter Verwendung des herkömmlichen CAN-PHY und CAN-Protokolls gefunden worden, die maximale Flexibilität für die Systemauslegung seitens der Kfz-Hersteller bietet. Die Weckinformation erfolgt mit Hilfe von frei definierten CAN-IDs, die beispielsweise heute nicht im Einsatz sind. Größtmögliche Flexibilität wird dadurch erreicht, dass erfindungsgemäß auch die CAN-Payload frei konfigurierbar ist.

Darüber hinaus ist es mit dem erfindungsgemäßen Verfahren möglich, in Abhängigkeit von der Weckursache/-quelle innerhalb einer Gruppe von Teilnehmern unterschiedliche Teilnehmer des Bus-Systems zu aktivieren. Dabei ist zu berücksichtigen, dass in manchen Anwendungsfällen bestimmte technische Funktionen nur mit Hilfe mehrerer Steuergeräte (Funktionsgruppen) durchgefuhrt werden können. Als Beispiel sei das Öffnen eines der hinteren Fenster genannt. Dabei müssen im Netzwerk bestimmte Parameter abgefragt werden, wie beispielsweise der Verriegelungszustand des Fahrzeuges, die Zündschlüsselposition und die Kindersicherung. Dabei kann die Anforderung zum Öffnen des hinteren Fensters verschiedene Ursachen haben. Das Fenster kann beispielsweise über die Fernbedienung oder über einen Schalter in der Fahrertur oder über einen Schalter in der betreffenden hinteren Tür geöffnet werden.

Das Öffnen über die Fernbedienung wird beispielsweise durch den Master 1 (beispielsweise Zentralverriegelung 32) initiiert, das Öffnen über die Schalter durch den Master 2 (beispielsweise das Tursteuergerät 34). Bei der Funktionsanforderung wird beispielsweise eine von zwei Funktionsgruppen A und B, d. h. eine Gruppe von Bus-Teilnehmern, selektiv geweckt. Anzumerken sei hier, dass die Funktionsgruppen A und B physikalisch mit demselben Bus (in diesem Fall dem "Kombi-CAN 18") verbunden sind.

In beiden Fällen wird das hintere Fenster geöffnet.

In beiden Fällen muss allerdings die Weckursache bekannt sein, um anschlie-βend lokal in dem Fensterhebersteuergerät den passenden Programmablauf zu gewährleisten. Kam beispielsweise die Anforderung von der Zentralverriegelung 32 und das Fahrzeug wurde innerhalb einer bestimmten Zeit nicht betreten, so schließt die Zentralverriegelung 32 das Fahrzeug wieder ab.

Die Weckanforderung kann mit Hilfe der CAN-ID festgelegt werden, und zwar durch eine Maskierung, die sich wie folgt darstellen könnte:
Wecken der Funktionsgruppe A durch Master 1: 1xxx
   Wecken der Funktionsgruppe A durch Master 2: 2xxx
Wecken der Funktionsgruppe B durch Master 1: 3xxx
   Wecken der Funktionsgruppe B durch Master 2: 4xxx

So wird dem geweckten Steuergerät mitgeteilt, woher der Weckimpuls gekommen ist. ID-Daten(-Inhalte) zwischen 1.000 und 1.999 stammen vom Master 1 und adressieren die Funktionsgruppe A, während ID-Daten(-Inhalte) zwischen 2.000 und 2.999 vom Master 2 stammen und die Funktionsgruppe B adressieren. Ferner stammen in diesem Beispiel ID-Daten(-Inhalte) zwischen 3.000 und 3.999 vom Master 1 und adressieren die Funktionsgruppe B, wohingegen ID-Daten(-Inhalte) zwischen 4.000 und 4.999 vom Master 2 stammen und die Funktionsgruppe B adressieren.

Der zuvor genannte Betrieb erlaubt es ferner ebenfalls, mehrere physikalische Bus-Systeme zu einem System zusammenzuführen, was zur Reduktion der Kosten führt.

## Patentansprüche

1. Verfahren zum Überführen von Teilnehmern (12, 22, 28 bis 42) eines Bus-Systems (14, 16, 18) aus einem ersten Zustand mit reduziertem Energieverbrauch in einen zweiten Zustand mit gegenüber dem ersten Zustand erhöhtem Energieverbrauch, wobei zur Kommunikation der Teilnehmer (12, 22, 28 bis 42) des Bus-Systems (14, 16, 18) Daten-Rahmen versendet werden, die unter anderem ein Nachrichten-Identifikationsfeld und ein Nutzdatenfeld aufweisen, wobei bei dem Verfahren
- jeder Teilnehmer (12, 22, 28 bis 42) für eine Überführung aus dem ersten Zustand in den zweiten Zustand auf Daten-Rahmen mit jeweils vorbestimmten Dateninhalten in dem Nachrichten-Identifikationsfeld reagiert und
- in dem Bus-System (14, 16, 18) zum selektiven Überführen eines Teilnehmers (12, 22, 28 bis 42) aus dem ersten Zustand in den zweiten Zustand diejenigen Daten-Rahmen versendet werden, auf deren Nachrichten-Identifikationsfeldinhalt der selektiv anzusprechende Teilnehmer (12, 22, 28 bis 42) reagiert,
**dadurch gekennzeichnet,**
- **dass** jeder Teilnehmer (12, 22, 28 bis 42) für eine Überführung aus dem ersten Zustand in den zweiten Zustand auf Daten-Rahmen mit jeweils vorbestimmten Dateninhalten sowohl in dem Nachrichten-Identifikationsfeld als auch in dem Nutzdatenfeld reagiert und
- **dass** in dem Bus-System (14, 16, 18) zum selektiven Überführen eines Teilnehmers (12, 22, 28 bis 42) aus dem ersten Zustand in den zweiten Zustand diejenigen Daten-Rahmen versendet werden, auf deren Nachrichten-Identifikationsfeldinhalt und Nutzdatenfeldinhalt der selektiv anzusprechende Teilnehmer (12, 22, 28 bis 42) reagiert.

2. Verfahren nach Anspruch 1, **dadurch gekennzeichnet, dass** das Bus-System (14, 16, 18) ein CAN-Bus-System ist und dass die vorbestimmten Dateninhalte in dem CAN-ID-Feld und dem CAN-Payload-Feld eines CAN-Daten-Rahmens abgelegt sind.

3. Verfahren nach Anspruch 1, **dadurch gekennzeichnet, dass** das Bus-System (14, 16, 18) ein LIN- oder FlexRay-Netzwerk aufweist.

4. Verfahren nach einem der Ansprüche 1 bis 3, **dadurch gekennzeichnet, dass** mehrere Teilnehmer (12, 22, 28 bis 42) des Bus-Systems (14, 16, 18) auf den gleichen vorbestimmten Dateninhalt in dem Nachrichten-Identifikationsfeld und auf unterschiedliche jeweils vorbestimmte Dateninhalte in dem Nutzdatenfeld reagieren.

5. Verfahren nach einem der Ansprüche 1 bis 3, **dadurch gekennzeichnet, dass** mehrere Teilnehmer (12, 22, 28 bis 42) auf unterschiedliche jeweils vorbestimmte Dateninhalte in dem Nachrichten-Identifikationsfeld und auf unterschiedliche jeweils vorbestimmte Dateninhalte in dem Nutzdatenfeld reagieren.

6. Verfahren nach einem der Ansprüche 1 bis 3, **dadurch gekennzeichnet, dass** mehrere Teilnehmer (12, 22, 28 bis 42) auf unterschiedliche jeweils vorbestimmte Dateninhalte in dem Nachrichten-Identifikationsfeld und auf den gleichen vorbestimmten Dateninhalt in dem Nutzdatenfeld reagieren.

## Claims

1. A method for the switching of participants (12, 22, 28 to 42) of a bus system (14, 16, 18) from a first state with reduced energy consumption to a second state with increased energy consumption relative to the first state, wherein, for communication between the participants (12, 22, 28 to 42) of the bus system (14, 16, 18), data frames are transmitted which comprise, *inter alia,* a message identification field and a useful-data field, wherein, according to said method
- each participant (12, 22, 28 to 42), for switching from the first state to the second state, reacts on data frames with respective predetermined data contents in the message identification field, and
- in the bus system (14, 16, 18), for selective switching of a participant (12, 22, 28 to 42) from the first state to the second state, those data frames are transmitted on whose message-identification-field contents the selectively addressable participant (12, 22, 28 to 42) reacts,
**characterized in**
- **that** each participant (12, 22, 28 to 42), for switching from the first state to the second state, reacts on data frames with respective predetermined data contents in the message identification field as well as in the useful-data field, and
- **that**, in the bus system (14, 16, 18), for selective switching of a participant (12, 22, 28 to 42) from the first state to the second state, those data frames are transmitted on whose message-identification-field contents and useful data-field-contents the selectively addressable participant (12, 22, 28 to 42) reacts.

2. The method according to claim 1, **characterized in that** the bus system (14, 16, 18) is a CAN bus system and the predetermined data contents have been stored in the CAN ID field and the CAN payload field of a CAN data frame.

3. The method according to claim 1, **characterized in that** the bus system (14, 16, 18) comprises a LIN or FlexRay network.

4. The method according to any one of claims 1 to 3, **characterized in that** a plurality of participants (12, 22, 28 to 42) of the bus system (14, 16, 18) react on the same predetermined data contents in the message identification field and on different, respectively predetermined data contents in the useful-data field.

5. The method according to any one of claims 1 to 3, **characterized in that** a plurality of participants (12, 22, 28 to 42) react on different, respectively predetermined data contents in the message identification field and on different, respectively predetermined data contents in the useful-data field.

6. The method according to any one of claims 1 to 3, **characterized in that** a plurality of participants (12, 22, 28 to 42) react on different, respectively predetermined data contents in the message identification field and on the same predetermined data contents in the useful-data field.

## Revendications

1. Procédé pour faire passer des abonnés (12, 22, 28 à 42) d'un système de bus (14, 16, 18) d'un premier état comportant une consommation d'énergie réduite à un deuxième état comportant une consommation d'énergie augmentée par rapport au premier état, dans lequel, pour la communication des abonnés (12, 22, 28 à 42) du système de bus (14, 16, 18), on envoie des trames de données qui présentent, entre autres, un champ d'identification des messages et un champ des données utiles, où dans le procédé
- pour le passage d'un premier état au deuxième état, chaque abonné (12, 22, 28 à 42) réagit à des trames de données comportant des contenus de données respectivement prédéterminés dans la zone d'identification des messages, et
- dans le système de bus (14, 16,18) pour le passage sélectif d'un abonné (12, 22, 28 à 42) du premier état au deuxième état, l'abonné (12, 22, 28 à 42) à interroger de façon sélective réagit au contenu du champ d'identification des messages des trames de données,
**caractérisé**
- **en ce que** pour le passage d'un premier état au deuxième état, chaque abonné (12, 22, 28 à 42) réagit à des trames de données comportant des contenus de données respectivement prédéterminés aussi bien dans le champ d'identification des messages que dans le champ des données utiles, et
- **en ce que** dans le système de bus (14, 16, 18), pour le passage sélectif d'un abonné (12, 22, 28 à 42) du premier état au deuxième état, on envoie les trames de données pour lesquelles l'abonné (12, 22, 28 à 42) à interroger de façon sélective réagit au contenu du champ d'identification des messages et au contenu du champ des données utiles.

2. Procédé selon la revendication 1, **caractérisé en ce que** le système de bus (14, 16, 18) est un système de bus CAN et **en ce que** les contenus de données prédéterminées sont enregistrés dans le champ CAN-ID et dans le champ CAN-charge utile (« CAN-payload ») d'une trame de données CAN.

3. Procédé selon la revendication 1, **caractérisé en ce que** le système de bus (14, 16, 18) présente un réseau LIN ou FlexRay.

4. Procédé selon l'une des revendications 1 à 3, **caractérisé en ce que** plusieurs abonnés (12, 22, 28 à 42) du système de bus (14, 16, 18) réagissent au même contenu de données prédéterminé dans le champ d'identification des messages et à différents contenus de données prédéterminés dans le champ des données utiles.

5. Procédé selon l'une des revendications 1 à 3, **caractérisé en ce que** plusieurs abonnés (12, 22, 28 à 42) réagissent à différents contenus de données respectivement prédéterminés dans le champ d'identification des messages et à différents contenus de données respectifs prédéterminés dans le champ des données utiles.

6. Procédé selon l'une des revendications 1 à 3, **caractérisé en ce que** plusieurs abonnés (12, 22, 28 à 42) réagissent à différents contenus de données respectifs prédéterminés dans le champ d'identification des messages et au même contenu de données prédéterminé dans le champ des données utiles.
